(19) Europäisches Patentamt
European Patent Office
Office européen des brevets

(11) **EP 0 495 255 B1**

(12) **EUROPEAN PATENT SPECIFICATION**

(45) Date of publication and mention
of the grant of the patent:
**19.06.1996 Bulletin 1996/25**

(51) Int Cl.$^6$: **G01N 30/34**

(21) Application number: **91200080.9**

(22) Date of filing: **17.01.1991**

(54) **Micro-flow processor**

Mikrofluss-Prozessor

Processeur de microdébit

(84) Designated Contracting States:
**AT BE CH DE DK FR GB IT LI LU NL SE**

(43) Date of publication of application:
**22.07.1992 Bulletin 1992/30**

(73) Proprietor: **LC PACKINGS NEDERLAND B.V.**
**1057 HM Amsterdam (NL)**

(72) Inventor: **Chervet, Jean-Pierre**
**1057 HM Amsterdam (NL)**

(74) Representative: **de Bruijn, Leendert C. et al**
**Nederlandsch Octrooibureau**
**P.O. Box 29720**
**2502 LS Den Haag (NL)**

(56) References cited:
NL-A- 7 801 663          US-A- 4 035 168

- ANALYTICAL CHEMISTRY, vol. 58, no. 7, June
1986, Columbus US, pp. 1368-1372; S.
SCHACHTERLE et al.: 'Preformed Gradient
Technique for Microbore High-Performance
Liquid Chromatography'

## Description

### Field of the invention

This invention refers to microseparation techniques in analytical chemistry such as micro liquid chromatography (MLC), capillary liquid chromatography (CLC), supercritcial fluid chromatography (SFC), open tubular liquid chromatography (OTLC), capillary electrophoresis (CE) and ancillary techniques.

### Background of the invention

The use of microseparation techniques such as MLC, CLC, SFC, OTLC, CE, etc. in analytical chemistry has attracted much attention, recently [1-4].
The increased separation efficiency, higher mass sensitivity, improved speed of analysis, and less solvent consumption are some of the advantages microseparation techniques can offer.
The analysis of biopolymers such as proteins, peptides, oligonucleotides, carbohydrates, etc., the trace analysis of contaminants such as pesticides, herbicides and fungicides etc., in ground water, soil, food and other matrices, require the highest degree of separation power and detection sensitivity. Microseparation techniques are often the sole alternative to fulfill these tasks. However, it has been reported by several authors [4-8] that one of the major limitation in microseparation techniques is the lack of reliable instrumentation. Although micropumps that allow gradient elution to be carried out are commercially available [9,10], the reproducibility and accuracy of gradient elution at low flow rates is not satisfactory [8]. Particularly when syringe pumps are used, the mixing of small flow rates of a few µl/min or even a fraction of these flow rates, which is necessary to run microgradients, is extremely difficult. The mixing chamber should have a volume in the sub-microliter range in order to minimize the dead volume (dwell-volume) and to reduce the delay time of the gradient formation. Further, the mixing device should provide an homogene mixing for any type of solvents and solvent composition used.
Mixing chambers which fulfill these requirements simply do not exist. An other drawback to using syringe pumps for the delivery of microgradients is the risk of microleakages. Small leakages are nearly impossible to detect because the resulting nanoliter volumes are not detected by the naked eye and due to their immediate evaporation. Furthermore, the flow equilibration of syringe pumps is rather time consuming and strongly affected by the solvent's compressibility and variations in temperature.
Facing all these difficulties, one may question if it is worthwhile to use syringe pumps even when their major advantage - the near pulse-free delivery - is required for flow-sensitive detectors (e.g., flame based, electrochemical, MS, etc.). With the advent of almost pulse-free reciprocating pumps, the conversion of milliliter flow rates into micro or even submicroliter flow rates using split flow techniques is an attractive alternative to deliver microflows. Reproducible gradient elution, however, is only possible when the changes in viscosity and compressibility are sufficiently compensated. We have invented a method for the manufacture of a microflow processor (MFP), utilizing flow splitting techniques which consider the changes in viscosity and compressibility during the gradient elution. Such an MFP has the advantage of deliver highly reproducible and accurate microflows under both, isocratic and gradient conditions. Further, it allows for upgrading conventional pumps, including syringe pumps, into highly reliable and precise micropumps avoiding the difficulties of mixing and proportioning microscale flow rates.

### Detailed description of the invention

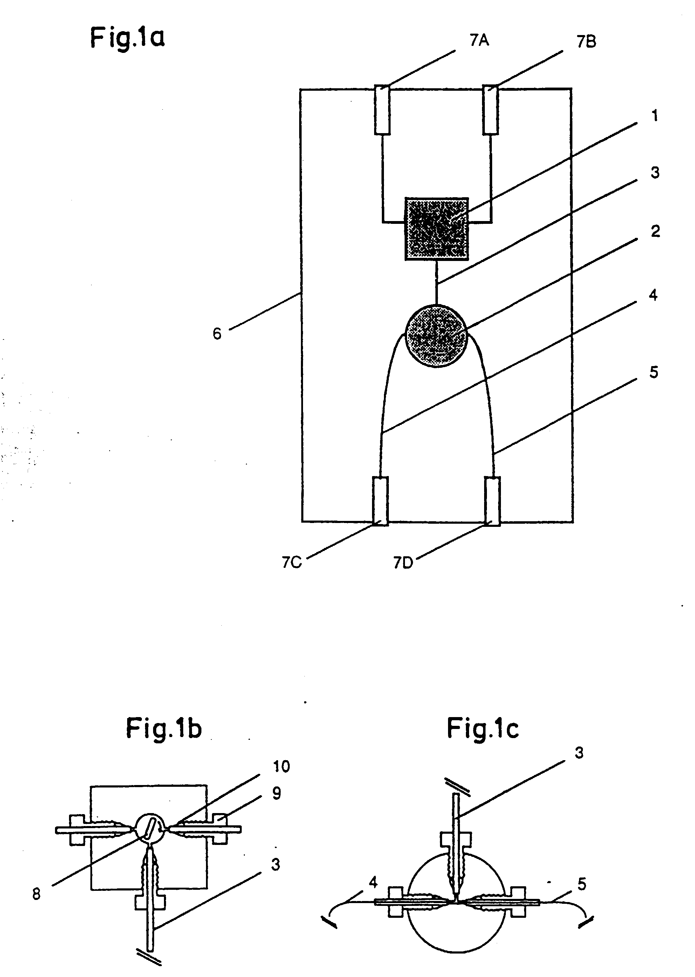

Figure 1 shows a scheme of the MFP. It consists of two parts mainly: a micromixer (1), either static or dynamic and a microsplitter (2) with different types of restrictors. Both parts are connected via a tubing (3) and mounted in a protective box (6) to get a stable configuration. With a total of 4 ports (7A-7D), the MFP can be easily interfaced between the pump(s) and the microseparation system.
By setting the microsplitter after the micromixer, allows the use of conventional flow rates (e.g. 0.2 - 1.0 ml/min) throughout the mixing device. Thus, the difficulties of mixing microflows are avoided and use of standard micromixers guaranteeing for homogene mixing with minimal delay volume are allowed. The higher flow rates also avoid the risk of solvent misproportioning which is a severe problem when microflows have to be delivered. The splitting ratio is accomplished by capillaries of different I.D. and lengths (4,5) by making use of the Hagen-Poiseuille relationship :

$$F_{cap} = (\pi \, \Delta p_{cap} r_{cap}^{4})/(8 \, L_{cap} \, \eta) \tag{1}$$

where $F_{cap}$ is the flow rate of mobile phase through the capillary, $\Delta p_{cap}$ is the pressure drop along the capillary, $r_{cap}$ and $L_{cap}$ are the radius and length of the capillary, respectively, and $\eta$ is the viscosity of the mobile phase.
Fixed splitting ratios (e.g., 1:70 for reciprocating pumps, 1:30 for syringe pumps) avoid the need of flow calibration and allow use of two restrictors (4,5) only to accommodate almost any type of microflow. The microflow rates can then be calculated according eqn. 2:

$$\text{microflow rate } (\mu l/min) = \text{input flow rate } (\mu l/min) / \text{split ratio} \qquad [2]$$

For example, with a programmed flow rate of 700 $\mu l/min$ (input flow) and a fixed splitting ratio of 1:70, a microflow of 10 $\mu l/min$ is delivered.

To guarantee reproducible solvent composition during the gradient elution, the volume of the two restrictors, $V_{cap(4)}$ and $V_{cap(5)}$, should be as close to each other in value with respect to the split ratio.

$$V_{cap(4)} = V_{cap(5)} \text{ x split ratio} \qquad [3]$$

To compensate changes in viscosities and compressibilities during the gradient elution and to minimize pulsations and other possible erratic fluctuations caused by the pump(s), the microsplitter (i.e. the adjusted capillary restrictors) provides additionally a backpressure. This backpressure ($\Delta p_{cap}$) should be preferably higher than the maximal back pressure of the microcolumn ($\Delta p_{max\ col.}$).

$$\Delta p_{cap} \geq \Delta p_{max\ col.} \qquad [4]$$

Assuming that the maximum backpressure a microcolumn can generate under relevant chromatographic conditions is much smaller than $\Delta p_{cap}$, then the flow delivery is almost unaffected by the type and composition of mobile phase.

Thus, by using the two adjusted restrictors (4,5), the delivery of microgradients is possible within a broad range of solvents of different viscosity and compressibility and for a large variety of capillary columns of different backpressure.

*Micromixer*

The micromixer (1) consist of a static or dynamic mixer with a small volume to minimize the delay volume. The volume of the mixer should be ≤ 500 ul. The static mixer can be made by using any type of conjunction (T-piece, Y-piece, union, etc) that combines the two flows and withstands pressures higher than 200 bar (e.g., stainless steel T-piece from Valco, Upchurch, Lee Viscojet micromixer etc). To enhance mixing and reduce delay volume, the conjunction can be packed with glass beads. Micromixers, e.g., rotating magnets (8), can be used as dynamic mixers. They can be made by machining a piece of stainless steel or titanium. Connections can be made with standard 1/16 or 1/32" high pressure fittings using standard nuts (9) and ferrules (10) or by soldering or gluing the tubings directly into the mixer.

*Microsplitter*

Basically, the microsplitter (2) consists of a same type of conjunction as the static micromixer but mounted in opposite direction in order to divide the flow into two streams. The volume of the splitter must be as small as possible. Therefore, the conjunction should have bores of I.D. ≤ 250 $\mu m$. (e.g. 0.25 mm I.D. T-piece from Valco, Upchurch, etc.).

*Connecting tubing*

The connecting line (3) between the micromixer and microsplitter can be made using any type of tubing with small I.D. and sufficient pressure resistance, e.g., stainless steel, PEEK, glass lined tubing, fused silica tubing, Polysil tubing, etc., Using static mixers, the connecting tubing further enables mixing of the fluids.

*Restrictors and split ratios*

The restrictors (4,5) are connected directly into the microsplitter, see Figure 1. They can consist of the same type of materials as mentioned under (3). Fused silica, however, is preferred, due to its availability in different I.D. and ease of cutting in different lengths, pressure stability and inertness. The connection can be made with any type of fitting that withstands high pressures and provides sufficient chemical stability, e.g., 1/16 or 1/32" standard fittings made by a stainless steel nut and a Vespel ferrule. PEEK tubings or other polymeric materials of appropriate dimensions can also be used in combination with a nut (9) and ferrule (10). Alternatively, the capillaries can be glued (e.g. epoxy resin) into the microsplitter. The split ratio is fixed to ca. 1:70 for reciprocating pumps and ca. 1:30 for syringe pumps. Any other split ratio can be accommodated by selecting the I.D. and length of the capillaries according equation 1. In Table I the used restrictors are specified.

Table I :

| Restrictor specifications | | |
|---|---|---|
| split ratio 1:30 | | |
| capillary | restrictor (4) | restrictor (5) |
| I.D. (μm) | 15±3 | 30±3 |
| length (cm) | 20±5 | 30±5 |
| split ratio 1:70 | | |
| capillary | restrictor (4) | restrictor (5) |
| I.D. (μm) | 15±3 | 50±3 |
| length (cm) | 20±5 | 50±5 |

Whereby, restrictors (4) and (5) connect the microsplitter with ports (7C) and (7D), respectively. The microflow is generated by restrictor (4), meanwhile restrictor (5) provides the necessary backpressure according equation [4].

*ports and box*

Standard 1/16 or 1/32" unions (e.g., stainless steel, Valco, Upchurch, etc.) are used for port 7A, 7B, and 7D. To prevent dead volumes, port 7C is made with a through type union (e.g. Valco ZU-TM) which permits the tubings to be butted directly together.
The ports are fixed in the wall of the protective box and allow for easy interfacing between the pump(s) and the microsystem with standard 1/16" or 1/32" fittings.

**Example**

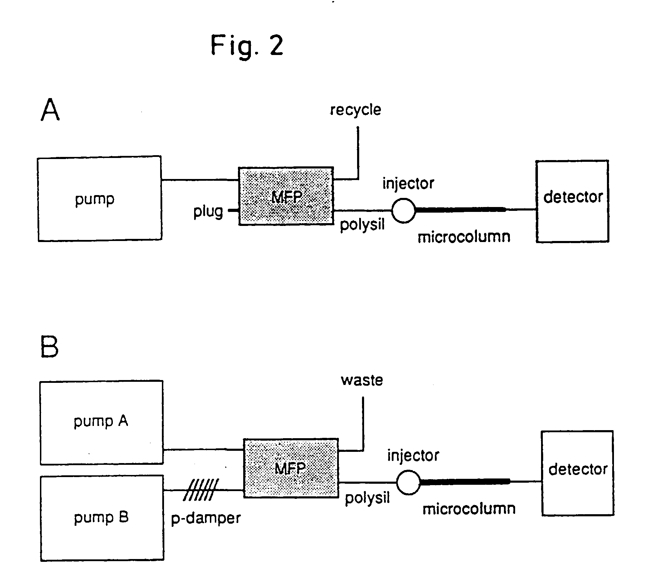

The installation of the MFP for isocratic and gradient operations is shown in Figure 2 A and B, respectively. For isocratic separations (scheme A) the pump is connected via port 7A to the MFP, meanwhile port 7B is sealed with a plug (e.g. 1/16" Valco). The microsystem is connected to the MFP via port 7C by using a low dead volume tubing (e. g. fused silica ≤ 50 μm I.D., maximal length 20 cm, or polysil tubing from SGE, etc.).

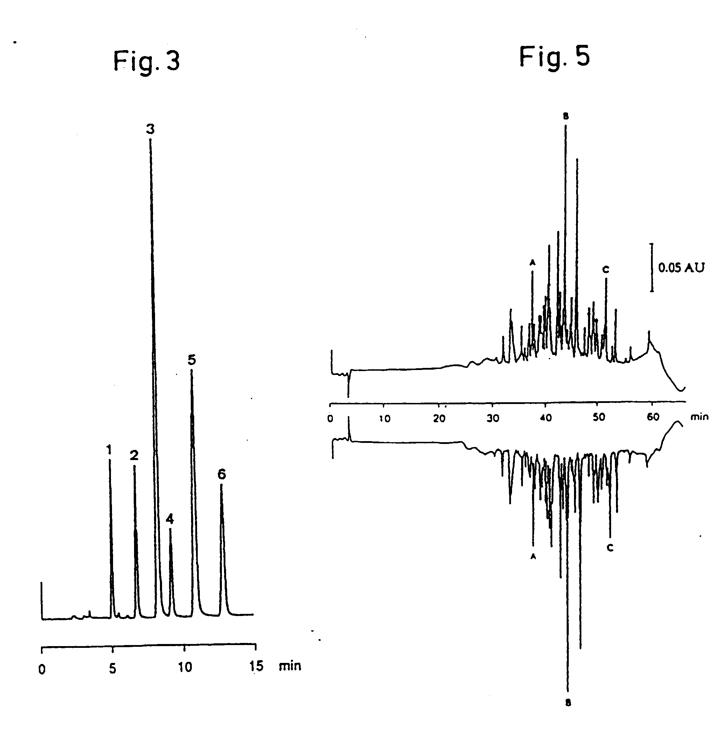

Figure 3 illustrates the isocratic separation of polyaromatic hydrocarbons (PAHs) under Capillary LC conditions, using a conventional reciprocating pump (e.g. Kontron, Waters, HP, etc.) and the MFP. With an input flow of 200 μl/min and a a split ratio of ca. 1:70 the flow rate of the pump was converted into a micro flow of 3 μl/min.
Relevant data regarding the separation process shown in Figure 3 are the following:

| | |
|---|---|
| column: | Fusica ™ 320 μm I.D. x 15 cm, C 18,3 μm (LC Packings) |
| mobile phase: | acetonitril/water (7:3) |
| pump: | conventional HPLC pump |
| mixer-splitter: | Acurate™ splitting ratio 1:70 |
| flow after split: | 3 μl/min |
| sample: | 1. benzene |
| | 2. naphthalene |
| | 3. biphenyl |
| | 4. fluorene |
| | 5. anthracene |
| | 6. fluoranthene |
| injection: | 60 nl |
| detection: | UV 254 nm |
| | Z-shaped flow cell |

In Table II the reproducibilities are summarized. With coefficient of variation of < 0.2% in retention time, excellent reproducibilities have been observed.

Table II

| Reproducibility under isocratic conditions (n=12) | | | | | | |
|---|---|---|---|---|---|---|
| n | Peak 1 | Peak 2 | Peak 3 | Peak 4 | Peak 5 | Peak 6 |
| 1 | 5.524 | 7.423 | 9.008 | 10.033 | 11.894 | 14.036 |
| 2 | 5.539 | 7.449 | 9.039 | 10.069 | 11.941 | 14.093 |
| 3 | 5.543 | 7.454 | 9.051 | 10.081 | 11.956 | 14.108 |
| 4 | 5.554 | 7.466 | 9.059 | 10.094 | 11.968 | 14.121 |
| 5 | 5.546 | 7.463 | 9.057 | 10.089 | 11.964 | 14.124 |
| 6 | 5.546 | 7.463 | 9.063 | 10.093 | 11.978 | 14.129 |
| 7 | 5.548 | 7.466 | 9.059 | 10.094 | 11.978 | 14.139 |
| 8 | 5.562 | 7.477 | 9.067 | 10.092 | 11.940 | 14.083 |
| 9 | 5.545 | 7.455 | 9.045 | 10.075 | 11.950 | 14.093 |
| 10 | 5.554 | 7.461 | 9.053 | 10.084 | 11.959 | 14.111 |
| 11 | 5.543 | 7.454 | 9.043 | 10.073 | 11.948 | 14.099 |
| 12 | 5.539 | 7.454 | 9.049 | 10.084 | 11.954 | 14.111 |
| mean | 5.545 | 7.457 | 9.049 | 10.080 | 11.953 | 14.104 |
| SD | 0.009 | 0.013 | 0.016 | 0.017 | 0.023 | 0.027 |
| CV % | 0.170 | 0.176 | 0.171 | 0.170 | 0.187 | 0.191 |

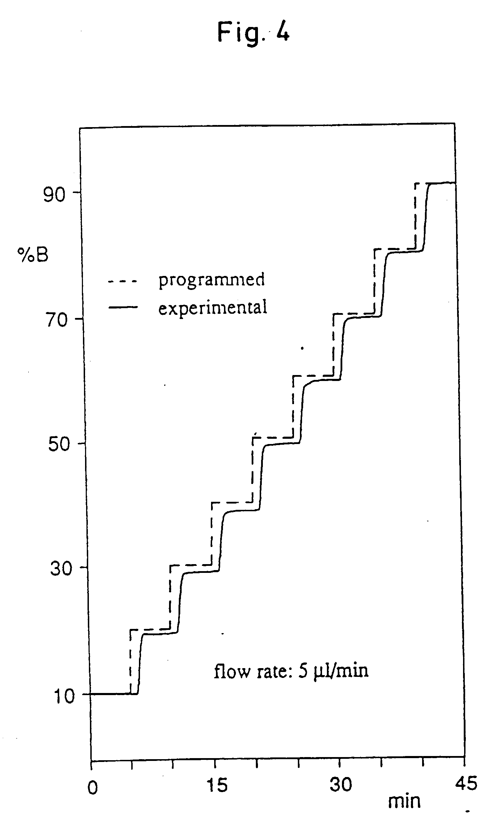

For gradient elution (Figure 2B), using high pressure mixing, the two pumps can be connected via port 7A and 7B, respectively. For gradient delivery systems with low pressure mixing the installation is similar to the one described in Figure 2A. The use of the MFP for generating highly reproducible microgradients is depicted in Figure 4. A step gradient (10% B every 5 min) was programmed to measure the accuracy of the proportioning and effectiveness of mixing. Pump A was delivering pure methanol, and pump B methanol spiked with 0.2% of acetone (input flow 350 µl/min, flow after split ca. 5 µl); UV detection at 254 nm. Excellent agreement between the programmed and measured step gradient was found. The delay volume (dwell volume) for the complete MFP (including mixer, connecting tubing, splitter, restrictor, port) is ≤ 5 µl.

Figure 5 shows the separation of digested β-lactoglobulin A under Capillary LC conditions. Tryptic digest of β-lactoglobulin A is performed using the MFP for the delivery of the microgradient (upper and lower trace are consecutive injections to illustrate the reproducibility). The retention time reproducibility for peptide A, B and C measured with consecutive injections over a period of several hours is listed in Tabel III. Without any thermostating, the CV values of ≤ 1.38% for the tryptic peptides demonstrate the performance of the micromixer and the delivery of highly reproducible microgradients using the MFP.

Relevant data regarding the separation process shown in Figure 5 are the following:

| | |
|---|---|
| column: | Fusica ™ 320 µm I.D. x 15 cm, |
| | C 18,3 µm (LC Packings) |
| mobile phase: | A) 0.1% TFA in water |
| | B) 0.08% TFA in acetonitril water (8:2) |
| gradient: | 5-50% B in 35 minutes |
| mixer-splitter: | Acurate™ splitting ratio 1:70 (LC Packings) |
| flow after split: | 5 µl/min |
| sample: | tryptic digest of β-lactoglobulin A |
| injection: | 100 µl (6.6 pmol) |
| detection: | UV 218 nm, 20 mm Z-cell (Kontron) |

Table III

| Reproducibility of the microgradients (n=10) | | | |
|---|---|---|---|
| n | Peak A | Peak B | Peak C |
| 1 | 37.20 | 42.37 | 51.67 |

Table III   (continued)

| Reproducibility of the microgradients (n=10) | | | |
|---|---|---|---|
| n | Peak A | Peak B | Peak C |
| 2 | 37.30 | 42.60 | 52.19 |
| 3 | 37.59 | 42.92 | 52.34 |
| 4 | 37.39 | 42.58 | 52.12 |
| 5 | 38.60 | 43.22 | 51.69 |
| 6 | 37.84 | 43.94 | 52.50 |
| 7 | 38.52 | 43.00 | 52.29 |
| 8 | 38.46 | 43.75 | 52.60 |
| 9 | 37.92 | 43.62 | 52.14 |
| 10 | 37.63 | 42.81 | 51.79 |
| | | | |
| mean | 37.85 | 43.08 | 52.13 |
| SD | 0.52 | 0.54 | 0.32 |
| CV % | 1.38 | 1.25 | 0.62 |

**References cited**

[1] P. Kucera, Ed., Microcolumn High Performance Liquid Chromatography; Elsevier Publishers, Amsterdam 1984

[2] M. V. Novotny and D. Ishii, Ed., Microcolumn Separations; Elsevier Publishers, Amsterdam 1985

[3] F.J. Yang, Ed., Microbore Column Chromatography: A Unified Approach to Chromatography; Marcel Dekker Publishers, New York 1989

[4] D. Ishii, Ed., Introduction to Microscale High Performance Liquid Chromatography, VCH Publishers, 1988

[5] E. C. Huang, T. Wachs, J. J. Conboy and J. D. Henion, Analytical Chemistry, 62 (1990) 713A

[6] J. E. Banks, Jr. and M. V. Novotny, J. of Microcolumn Separations, 2 (1990) 84

[7] P. R. Brown, Analytical Chemistry, 62 (1990) 995A

[8] D. Ishii in 12th International Symposium on Capillary Chromatography, Edited by K. Jinno and P. Sandra, Industrial Publishing & Consulting, Inc., Japan 1990

[9] F. Andreolini, and A. Trisciani, J. of Chromatographic Science, 28 (1990) 54

[10] K. Potter and J. Tehrani, LC/GC International, 3 (1990) 39

**Claims**

1. Method of making a microflow processor for the conversion of conventional flow rates of ml/min into microflow rates of μl/min in microseparation techniques, which consists of the following steps:

   - placing a splitting device (2) after a mixing device (1), so that the dead volume of said mixing device can be neglected by making use of higher flow rates resulting in improved mixing and proportioning of the delivered solvents;
   - connecting said mixing device with said splitting device by means of a connecting tubing (3);
   - inserting one or more restrictors (4,5) preferably directly into said splitting device to minimize dead volumes and to accomplish split ratios.

2. Microflow processor for the conversion of conventional flow rates of ml/min into microflow rates of μl/min in microseparation techniques, in which:

   - a splitting device (2) is placed after a mixing device (1), so that the dead volume of said mixing device can be neglected by making use of higher flow rates resulting in improved mixing and proportioning of the delivered solvents;
   - said mixing device is connected with said splitting device by means of a connecting tubing (3);
   - one or more restrictors (4,5) are inserted preferably directly into said splitting device to minimize dead volumes and to accomplish split ratios.

3. Microflow processor according to claim 2, in which at least two restrictors (4,5) are placed in said splitting device (2) to compensate for changes in viscosity, column backpressures and fluctuations of the delivery system, the volume of the restrictor providing the back pressure being essentially similar to the volume of the restrictor delivering the microflow with respect to the splitting ratio.

4. Microflow processor according to claim 2 or 3, in which at least the restrictor of the microflow pathway is connected to a union having essentially no dead volume.

5. Microflow processor according to claims 2, 3 or 4, in which at least the restrictor of the microflow pathway has an inner diameter less than 50 μm.

6. Microflow processor according to one or more of the preceding claims 2 trough 5, in which said mixing device includes a static or a dynamic mixing device having volumes of 0.1 μl to 10 ml.

7. Microflow processor according to one or more of the preceding claims 2 trough 6, in which said connecting tubing can be avoided by directly connecting said restrictors into said mixing device.

8. Microflow processor according to one or more of the preceding claims 2 trough 7, in which said restrictor for microflow pathway includes its direct connection to a microseparation apparatus and/or its miniaturization for minimizing said dead volume.

9. Microflow processor according to one or more of the preceding claims 2 trough 8, in which one or more solvent delivery systems such as syringe pumps, reciprocating pumps, low, high and/or mixed pressure mixing devices are connected to said microflow processor.

10. Microflow processor according to one or more of the preceding claims 2 trough 9, in which said microflow processor is connected to an apparatus for use in microseparation techniques such as micro liquid chromatography, capillary liquid chromatography, supercritical fluid chromatography, open tubular chromatography, capillary electrophoresis and ancillary techniques.

## Patentansprüche

1. Verfahren zum Herstellen eines Mikroflußprozessors für die Umwandlung herkömmlicher Flußraten von ml/min in Mikroflußraten von μl/min in Mikroseparationsverfahren, das aus den folgenden Schritten besteht:

   - Anordnen einer Aufteilvorrichtung (2) nach einer Mischvorrichtung (1), so daß das Totvolumen der Mischvorrichtung vernachlässigt werden kann, indem höhere Flußraten verwendet werden, was eine verbesserte Mischung und Dosierung der abgegebenen Lösungsmittel zur Folge hat;
   - Verbinden der Mischvorrichtung mit der Aufteilvorrichtung mittels einer Verbindungsrohrleitung (3);
   - Einführen einer oder mehrerer Drosseln (4, 5) bevorzugt direkt in die Aufteilvorrichtung, um Totvolumina zu minimieren und Aufteilverhältnisse zu erreichen.

2. Mikroflußprozessor für die Umwandlung herkömmlicher Flußraten von ml/min in Mikroflußraten von μl/min in Mikroseparationsverfahren, in dem:

   - eine Aufteilvorrichtung (2) nach einer Mischvorrichtung (1) angeordnet ist, so daß das Totvolumen der Mischvorrichtung vernachlässigt werden kann, indem höhere Flußraten verwendet werden, was eine verbesserte Mischung und Dosierung der abgegebenen Lösungsmittel zur Folge hat;
   - die Mischvorrichtung mit der Aufteilvorrichtung mittels einer Verbindungsrohrleitung (3) verbunden ist;
   - eine oder mehrere Drosseln (4, 5) bevorzugt direkt in die Aufteilvorrichtung eingesetzt sind, um Totvolumina zu minimieren und Aufteilverhältnisse zu erreichen.

3. Mikroflußprozessor nach Anspruch 2, in dem wenigstens zwei Drosseln (4, 5) in der Aufteilvorrichtung (2) angeordnet sind, um Änderungen in der Viskosität, den Säulengegendrücken und Fluktuationen des Abgabesystems zu kompensieren, wobei das Volumen der den Gegendruck liefernden Drossel im wesentlichen ähnlich dem Volumen der den Mikrofluß liefernden Drossel ist bezüglich des Aufteilverhältnisses.

**4.** Mikroflußprozessor nach Anspruch 2 oder 3, in dem wenigstens die Drossel des Mikroflußweges mit einem Anschlußstück verbunden ist, das im wesentlichen kein Totvolumen aufweist.

**5.** Mikroflußprozessor nach Anspruch 2, 3 oder 4, in dem wenigstens die Drossel des Mikroflußweges einen Innendurchmesser kleiner als 50 μm aufweist.

**6.** Mikroflußprozessor nach einem oder nach mehreren der vorangehenden Ansprüche 2 bis 5, in dem die Mischvorrichtung eine statische oder dynamische Mischvorrichtung mit Volumina von 0,1 μl bis 10 ml umfaßt.

**7.** Mikroflußprozessor nach einem oder mehreren der vorangehenden Ansprüche 2 bis 6, in dem die Verbindungsrohrleitung durch direktes Verbinden der Drosseln mit der Mischvorrichtung vermieden werden kann.

**8.** Mikroflußprozessor nach einem oder mehreren der vorangehenden Ansprüche 2 bis 7, in dem die Drossel für den Mikroflußweg ihre direkte Verbindung mit einer Mikroseparationsvorrichtung und/oder ihre Miniaturisierung zum Minimieren des Totvolumens umfaßt.

**9.** Mikroflußprozessor nach einem oder mehreren der vorangehenden Ansprüche 2 bis 8, in dem ein oder mehrere Lösungsmittel-Abgabesysteme, wie Spritzenpumpen, Hubkolbenpumpen, Nieder-, Hoch- und/oder Mischdruck-Mischvorrichtungen mit dem Mikroflußprozessor verbunden sind.

**10.** Mikroflußprozessor nach einem oder mehreren der vorangehenden Ansprüche 2 bis 9, in dem der Mikroflußprozessor mit einer Vorrichtung zur Verwendung in Mikroseparationsverfahren, wie etwa Mikroflüssigkeitschromatografie, Kapillarflüssigkeitschromatografie, superkritische Fluidchromatografie, Offenrohrchromatografie, Kapillarelektrophorese und Hilfsverfahren, verbunden ist.

**Revendications**

**1.** Procédé de fabrication d'un processeur de microflux pour la conversion des vitesses de flux usuels, en ml/min, en vitesses de microflux en μl/min dans des techniques de microséparation, comprenant les étapes consistant à :

- placer un dispositif de partage (2) à l'arrière d'un dispositif mélangeur (1) de manière telle que le volume mort dudit dispositif mélangeur puisse être négligé grâce à l'utilisation de vitesses d'écoulement plus élevées, conduisant à une amélioration du mélange et du dosage des solvants distribués ;
- relier ledit dispositif mélangeur audit dispositif de partage au moyen d'un tube de connexion (3) ;
- insérer un ou plusieurs restricteurs (4, 5) de préférence directement dans ledit dispositif de partage pour réduire au minimum les volumes morts et pour atteindre les taux de partage.

**2.** Processeur de microflux pour la conversion des vitesses de flux usuels, en ml/min, en vitesses de microflux en μl/min dans des techniques de microséparation, dans lequel :

- un dispositif de partage (2) est placé à l'arrière d'un dispositif mélangeur (1) de manière telle que le volume mort dudit dispositif mélangeur puisse être négligé grâce à l'utilisation de vitesses d'écoulement plus élevées, conduisant à une amélioration du mélange et du dosage des solvants distribués ;
- ledit dispositif mélangeur est relié audit dispositif de partage au moyen d'un tube de connexion (3) ;
- un ou plusieurs restricteurs (4, 5) sont insérés de préférence directement dans ledit dispositif de partage pour réduire au minimum les volumes morts et pour atteindre les taux de partage.

**3.** Processeur de microflux selon la revendication 2, dans lequel au moins deux restricteurs (4, 5) sont placés dans ledit dispositif de partage (2) pour compenser les changements de viscosité, les pressions en retour dans la colonne et les fluctuations du système de distribution, le volume du restricteur fournissant la pression en retour étant essentiellement similaire au volume du restricteur distribuant le microflux en ce qui concerne le taux de partage.

**4.** Processeur de microflux selon la revendication 2 ou 3, dans lequel au moins le restricteur de la trajectoire du microflux est relié à un raccord essentiellement sans volume mort.

**5.** Processeur de microflux selon les revendications 2, 3 ou 4, dans lequel au moins le restricteur de la trajectoire du microflux a un diamètre intérieur inférieur à 50 μm.

**6.** Processeur de microflux selon une ou plusieurs des revendications précédentes 2 à 5, dans lequel ledit dispositif mélangeur comprend un dispositif de mélange statique ou dynamique ayant un volume de 0,1 µl à 10 ml.

**7.** Processeur de microflux selon une ou plusieurs des revendications précédentes 2 à 6, dans lequel ledit tube de connexion peut être supprimé grâce à la connexion directe desdits restricteurs dans ledit dispositif mélangeur.

**8.** Processeur de microflux selon une ou plusieurs des revendications précédentes 2 à 7, dans lequel ledit restricteur pour la trajectoire du microflux comprend sa connexion directe à un appareil de microséparation et/ou sa miniaturisation pour réduire au minimum ledit volume mort.

**9.** Processeur de microflux selon une ou plusieurs des revendications précédentes 2 à 8, dans lequel un ou plusieurs systèmes de distribution de solvants, comme des pompes à seringue, des pompes à mouvement alternatif, des dispositifs mélangeurs à pression basse, élevée ou mixte, sont reliés audit processeur de microflux.

**10.** Processeur de microflux selon une ou plusieurs des revendications précédentes 2 à 9, ledit processeur de microflux étant relié à un appareil pour une utilisation dans des techniques de microséparation comme la chromatographie microliquide, la chromatographie liquide capillaire, la chromatographie fluide supercritique, la chromatographie à tube ouvert, l'électrophorèse capillaire et des techniques auxiliaires.

# Fig.1a

7A  7B

1

3

2

4

5

6

7C  7D

# Fig.1b

10

9

8

3

# Fig.1c

3

4

5

## Fig. 2

**A**

**B**

# Fig. 3

# Fig. 5

# Fig. 4

flow rate: 5 μl/min

- - - programmed
— experimental